# EUROPEAN PATENT SPECIFICATION

(11) **EP 0 492 746 B1**
(45) Date of publication and mention of the grant of the patent: **08.05.1996**
(21) Application number: 91203440.2
(22) Date of filing: 30.12.1991
(51) Int. Cl.: A01G 3/04, B23D 49/16, B23D 49/00, F16H 21/36

(54) **Hedge trimmer**
Heckenschere
Cisaille à haies

(30) Priority: 28.12.1990 NL 9002903
(43) Date of publication of application: 01.07.1992
(73) Proprietor: EMERSON ELECTRIC CO., NL-4825 BD Breda (NL)
(72) Inventor: Quirijnen, Antonius Johannes Jacobus, NL-5124 ND Molenschot (NL); Houben, Jan Peter, NL-4834 LV Breda (NL)
(74) Representative: Eveleens Maarse, Pieter

(56) References cited:
- EP-A- 0 151 524
- DE-A- 2 126 944
- DE-A- 3 408 847
- DE-A- 3 816 363
- GB-A- 112 767
- GB-A- 2 070 404
- US-A- 4 036 236

## Description

The invention relates to a device comprising at least one reciprocating operating member and driven by a motor, for example an electric motor, wherein on the shaft of the motor is arranged a pinion which is in engagement with a gear rim arranged on a circular disc and wherein converting means are coupled to the circular disc for converting a rotating movement into a reciprocating movement.

Such a device is known from GB-A-2070404.

In this known device the reciprocating movement is used for driving the blades of hedge clippers. Converting of the rotating to the reciprocating movement takes place by means of a crank mechanism.

Due to the crank mechanism the form of movement of the reciprocating movement is dictated by the dimensioning of the crank mechanism.

Further, from DE-A-1553822 a reciprocating cutting device is known, comprising; a reciprocating knife blade; a motor for driving said reciprocating knife blade; a circular disc rotatable around an axis and comprising a gear rim on its circumference; and converting means for converting the rotating movement of the circular disc into a reciprocating movement, the converting means comprising at least a first element arranged on a first side of the circular disc and extending through a slot arranged in a first plate connected to said reciprocating knife blade.

In this prior art apparatus there is only question of one reciprocating member, wherein no means are present for balancing the movement of said reciprocating element. Hence, the whole apparatus will be subject to a certain vibration which is unpleasant for the user.

The aim of the invention is to provide an apparatus in which the above mentioned disadvantages are avoided.

This aim is reached with the characterising features of claims 1 and 2.

The present invention will now be elucidated with reference to the annexed drawings, in which:
fig. 1 shows a partly broken away side view of two-bladed hedge clippers according to the invention;
fig. 2 is a top view of the driving of the hedge clippers shown in fig. 1;
fig. 3 is a perspective view of the hedge clippers shown in fig. 1;
fig. 4 shows a sectional view along the line IV-IV in fig. 3;
fig. 5 is a detail sectional view according to V in fig. 2; and
fig. 6 is a top view of an alternative embodiment of the driving according to the invention.

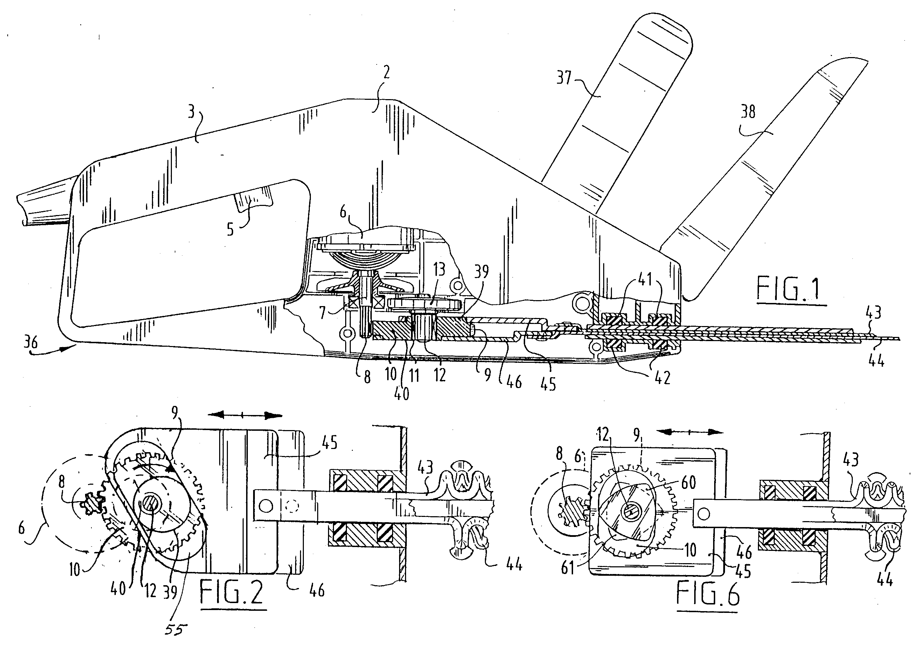

Shown in fig. 1 are hedge clippers 36 which are formed by a housing 2, on which is arranged a handle 3, and a second handle 37.

Further arranged is a protective plate 38 to protect the hand of the user lying on the handle 37. An electric motor 6 is also arranged in housing 2 on the output shaft 7 on which is arranged a gear rim 8. The gear rim 8 is in engagement with the gear rim 9 arranged on a circular disc 10. The circular disc 10 is arranged by means of a bearing 11 for rotation round a fixedly arranged shaft 12 which is fixedly connected to a disc 13.

A first eccentric disc 39 is arranged on the top of the circular disc 10, while a second eccentric disc 40 is arranged on the underside of disc 10.

Arranged in housing 2 is a top guiding 41 and a bottom guiding 42. Arranged slidably in longitudinal direction between both these are two blades 43, 44. The top blade 43 is fixedly connected to an upper plate 45 and the bottom blade is fixedly connected to a lower plate 46. A slot 55 is arranged in both plates 45, 46.

When the motor 6 is switched on by means of the switch 5 and the circular disc 10 is driven rotationally via shaft 7 and gear rim 8, both eccentrically arranged discs 39, 40 will perform a rotating movement, whereof the components extending parallel to the slots 55 are transmitted to the plates 45, 46 and therewith to the knife blades 43 and 44.

Due to the slanting positions of the slots 55, as can be seen in fig. 2, the sine-shaped speed curve is distorted; such a distorted or shifted sine shaped speed curve has attractive cutting properties for such a tool since the maximum speed of the knife occurs shortly after the beginning of a cutting movement when there is the greatest chance of a branch or twig being cut off.

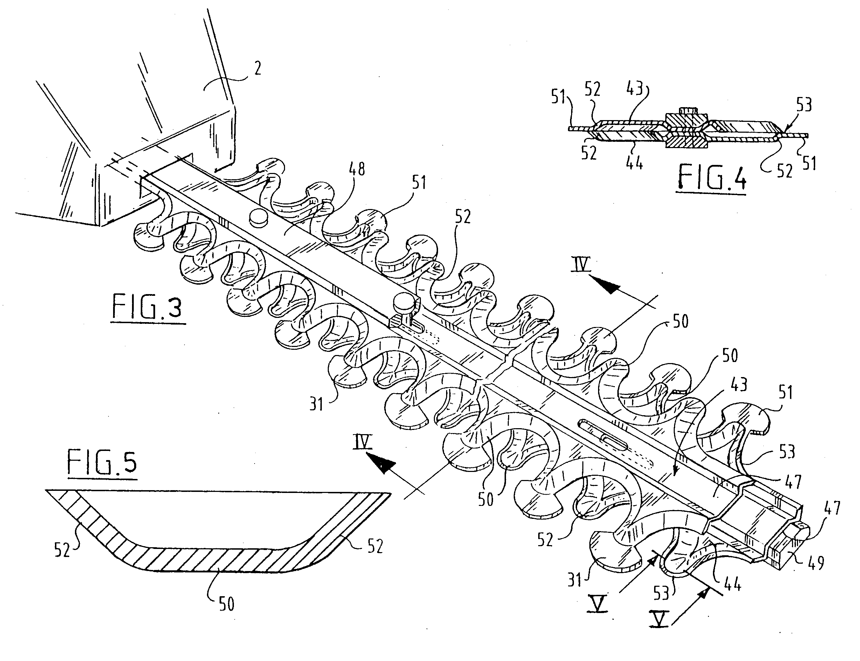

Fig. 3 shows a set of knife blades 43, 44 in more detail. Both the knife blades 43, 44, which are otherwise of identical shape, are formed from thin plate material. By means of bending the plate material a groove 47 is formed in the middle of each knife blade. Arranged in each of the grooves 47 is a reinforcing strip 48 and 49 respectively. The shape of the respective strips 48, 49 corresponds precisely with that of the relevant knife blade. Arranged on both sides of each knife blade is a series of pointed teeth 50 which have a shape such that arcuate recesses are created between the teeth. On one side of each knife blade each tooth is provided with a fan-shaped protrusion 51. These protrusions, arranged in the first place for safety reasons, prevent branches of too great a diameter entering the recess formed between two teeth, so that the maximum cutting power of the hedge clippers is not exceeded.

The fan-shaped protrusions 51 also serve to hold the branches once they are received into the relevant recess.

With respect to the cutting surfaces it is noted that the edges of the teeth are bent towards each other with a slanting edge. This has the consequence that it is possible during manufacture of the knife blades to grind to sharpness all cutting surfaces in one operation on the underside of the knife blade. The knife blade can later also be resharpened in a single grinding operation, for instance when the knife blade has become blunted through wear. The above can also be seen in fig. 4.

Fig. 5 shows clearly how, by bending over the edges 52 of the teeth, the cutting surfaces are located in one plane and can be ground flat by a single grinding operation.

Finally, fig. 6 shows an alternative embodiment of the driving according to the invention. The embodiment shown here corresponds with the embodiment shown in fig. 2 except that the slot arranged in plate 45 extends perpendicular relative to the direction of movement. When an element with a round circumference is arranged in such a straight slot the operating member will perform a movement with a sine shaped speed curve.

In order to cause the knife blade to perform a movement with a speed curve of a modified sine shape, the element must have a shape as shown in Fig. 6 and as claimed in claim 2. It is of importance here that in order to prevent play between the element and the inner walls of the slot the greatest distance in the direction of movement of the element is always the same, namely equal to the width of the slot. The element depicted in fig. 6 is formed by an equilateral triangle, the sides of which are formed by parts of an epitrochoïdal curve.

Said triangle is placed concentrically with the axis of the circular disc. This is not essential, however; It is equally possible to place said triangle non-concentrically. A compound movement then occurs.

## Claims

1. Reciprocating cutting device, comprising;
- a first reciprocating knife blade (43);
- a motor (6) for driving said first reciprocating knife blade (43);
- a pinion (8) arranged on the shaft (7) of said motor (6);
- a circular disc (10) rotatable around an axis (12) extending perpendicular to the disc (10) through the centre thereof and comprising a gear rim (9) on its circumference, the gear rim (9) being in engagement with the pinion (8); and
- converting means (39,40,45,46) for converting the rotating movement of the circular disc (10) into a reciprocating movement, the converting means (39,40,45,46) comprising at least a first eccentric disc (39) arranged on a first side of the circular disc (10) and extending through a slot (55) arranged in a first plate (45) connected to said first reciprocating knife blade (43),
**characterized** in that on the second side of the circular disc (10) a second eccentric disc (40) has been arranged extending through a slot (55) arranged in a second plate (46) connected with a second reciprocating knife blade (44), and in that the eccentric discs (39,40) are mutually non-concentrically arranged on the circular disc (10), and that the slots (55) each extend at the same slant relative to the direction of movement of the blades (43,44).

2. Reciprocating cutting device, comprising:
- a first reciprocating knife blade (43);
- a motor (6) for driving said first reciprocating knife blade (43);
- a pinion (8) arranged on the shaft (7) of said motor (6);
- a circular disc (10) rotatable around an axis (12) extending perpendicular to the disc (10) through the centre thereof and comprising a gear rim (9) on its circumference, the gear rim (9) being in engagement with the pinion (8); and
- converting means (39,40,45,46) for converting the rotating movement of the circular disc (10) into a reciprocating movement,
**characterized**
- by a second reciprocating knife blade (44), and
- in that the converting means comprise a first plate (45) connected to said first reciprocating knife blade (43) and a second plate (46) connected to said second reciprocating body (44) and further comprise an epitrochoidal sided equilateral triangle on each side of said circular disc (10) and extending through a slot (55) in each of said plates (45,46), each said slot extending perpendicular to the direction of movement of the blades (43,44).

3. Device as claimed in claim 1 or 2, **characterized** in that the device is an electric hedge clipper, and that at least one of the reciprocating knife blades (43,44) is formed from plate material and presents cutting teeth (50) with cutting edges (52) which are bent towards each other such, that the cutting edges (52) are formed by a bounding surface of the plate material and constitute a grinding surface extending parallel to the blade (43,44).

4. Device as claimed in claim 3, **characterized** in that the blades are each provided with a groove (47) extending in lengthwise direction of the blade and obtained by bending of the plate material.

5. Device as claimed in claim 4, **characterized** in that the reinforcing strip (48,49) is arranged in the groove (47) and that the reinforcing strips (48,49) are mutually connected through the blades (43,44).

6. Device as claimed in one of the preceding claims, **characterized** in that the blades (43,44) are each provided on one side with means (51) for limiting the maximum branch thickness for cutting and that the blades (43,44) are arranged in mutually opposite directions.

7. Device as claimed in claim 6, **characterized** in that the means for limiting the maximum branch thickness for cutting are formed by fan-shaped protrusions (51) arranged on each of the teeth (50) present on one side of the blade (43,44).

## Patentansprüche

1. Sich hin- und herbewegende Schneidvorrichtung, die
- ein erstes sich hin- und herbewegendes Schneidmesser (43);
- einen Motor (6) zum Antreiben des ersten sich hin- und herbewegenden Schneidmessers (43);
- ein Ritzel (8), das auf der Welle (7) des Motors (6) angeordnet ist;
- eine kreisförmige Scheibe (10), die drehbar um eine Achse (12) ist, die sich senkrecht zu der Scheibe (10) durch deren Mitte hindurch erstreckt, und die einen Zahnkranz (9) an ihrem Umfang aufweist, wobei der Zahnkranz (9) mit dem Ritzel (8) in Eingriff steht; und
- Umwandlungsmittel (39, 40, 45, 46) zur Umwandlung der Drehbewegung der kreisförmigen Scheibe (10) in eine hin- und hergehende Bewegung aufweist, wobei die Umwandlungsmittel (39, 40, 45, 45) zumindest eine erste exzentrische Scheibe (39) aufweisen, die auf einer ersten Seite der kreisförmigen Scheibe (10) angeordnet ist und sich durch einen Schlitz (55) erstreckt, der in einer ersten Platte (45) angeordnet ist, die mit dem ersten sich hin- und herbewegenden Schneidmesser (43) verbunden ist,
**dadurch gekennzeichnet**, daß auf der zweiten Seite der kreisförmigen Scheibe (10) eine zweite exzentrische Scheibe (40) angeordnet ist, die sich durch einen Schlitz (55) erstreckt, der in einer zweiten Platte (46) angeordnet ist, die mit einem zweiten sich hin- und herbewegenden Schneidmesser (44) verbunden ist, und daß die exzentrischen Scheiben (39, 40) nichtkonzentrisch zueinander auf der kreisförmigen Scheibe (10) angeordnet sind, und daß sich die Schlitze (55) jeweils in derselben Schräge auf die Bewegungsrichtung der Schneidmesser (43, 44) bezogen erstrecken.

2. Sich hin- und herbewegende Schneidvorrichtung, die
- ein erstes sich hin- und herbewegendes Messer (43);
- einen Motor (6) zum Antrieb des ersten sich hin- und herbewegenden Schneidmessers (43);
- ein Ritzel (8), das auf der Welle (7) des Motors (6) angeordnet ist;
- eine kreisförmige Scheibe (10), die drehbar um eine Achse (12) ist, die sich senkrecht zu der Scheibe (10) durch deren Mitte hindurch erstreckt, und die einen Zahnkranz (9) an ihrem Umfang aufweist, wobei der Zahnkranz (9) mit dem Ritzel (8) in Eingriff steht; und
- Umwandlungsmittel (39, 40, 45, 46) zum Umwandeln der Drehbewegung der kreisförmigen Scheibe (10) in eine hin- und hergehende Bewegung aufweist,
**gekennzeichnet**,
- durch ein zweites sich hin- und herbewegendes Schneidmesser (44), und
- dadurch, daß die Umwandlungsmittel eine erste Platte (45), die mit dem ersten sich hin- und herbewegenden Schneidmesser (43) verbunden ist und eine zweite Platte (46), die mit dem zweiten sich hin- und herbewegenden Körper (44) verbunden ist, aufweisen, und weiter ein mit epitrochoidischen Seiten versehenes gleichseitiges Dreieck auf jeder Seite der kreisförmigen Scheibe (10) aufweisen, das sich durch einen Schlitz (55) in jeder der Platten (45, 46) erstreckt, wobei sich jeder Schlitz senkrecht zu der Bewegungsrichtung der Messer (43, 44) erstreckt.

3. Vorrichtung nach Anspruch 1 oder 2, **dadurch gekennzeichnet**, daß die Vorrichtung eine elektrische Heckenschere ist, und daß zumindest eines der sich hin- und herbewegenden Schneidmesser (43, 44) aus dem Plattenmaterial gebildet ist und Schneidzacken (50) mit Schneidrändern (52) aufweisen, welche derart zueinander gebogen sind, daß die Schneidränder (52) durch eine Randfläche des Plattenmaterials gebildet sind und eine Schleiffläche bilden, die sich parallel zu dem Messer (43, 44) erstreckt.

4. Vorrichtung nach Anspruch 3, **dadurch gekennzeichnet**, daß die Messer jeweils mit einer Nut (47) versehen sind, die sich in Langsrichtung des Messers erstreckt und durch Ausbiegung des Plattenmaterials erhalten ist.

5. Vorrichtung nach Anspruch 4, **dadurch gekennzeichnet**, daß die verstärkende Schiene (48, 49) in der Nut (47) angeordnet ist und daß die verstärkenden Schienen (48, 49) gegenseitig über die Messer (43, 44) verbunden sind.

6. Vorrichtung nach einem der vorhergehenden Ansprüche, **dadurch gekennzeichnet**, daß die Messer (43, 44) jeweils an einer Seite mit Mitteln (51) zur Begrenzung der maximalen Astdicke zum Schneiden versehen sind und daß die Messer (43, 44) in einander entgegengesetzten Richtungen angeordnet sind.

7. Vorrichtung nach Anspruch 6, **dadurch gekennzeichnet**, daß die Mittel zur Begrenzung der maximalen Astdicke zum Schneiden durch fächerförmige Vorsprünge (51) gebildet sind, die an jeder der Zacken (50), die an einer Seite des Messers (43, 44) vorliegen, angeordnet sind.

## Revendications

1. Dispositif de coupe à mouvement alternatif comprenant
- une première lame de couteau à mouvement alternatif (43) ;
- un moteur (6) pour entraîner ladite première lame de couteau à mouvement alternatif (43) ;
- un pignon (8) placé sur l'arbre (7) dudit moteur (6) ;
- un disque circulaire (10) tournant autour d'un axe (12) s'étendant perpendiculairement au disque (10) par son centre et comprenant une couronne dentée (9) sur sa circonférence, la couronne dentée (9) étant engagée avec le pignon (8) ; et
- un moyen de conversion (39, 40, 45, 46) pour convertir le mouvement rotatif du disque circulaire (10) en un mouvement alternatif, le moyen de conversion (39, 40, 45, 46) comprenant au moins un premier disque excentrique (39) placé sur un premier côté du disque circulaire (10) et s'étendant par une fente (55) qui se trouve dans une première plaque (45) connectée à ladite première lame de couteau à mouvement alternatif (43),
caractérisé en ce que sur le second côté du disque circulaire (10), un second disque excentrique (40) a été placé, qui s'étend par une fente (55) placée dans une seconde plaque (46) connectée à une seconde lame de couteau à mouvement alternatif (44), et en ce que les disques excentriques (39, 40) sont disposés de manière mutuellement non concentrique sur le disque circulaire (10), et en ce que les fentes (55) s'étendent chacune avec la même inclinaison par rapport à la direction du mouvement des lames (43, 44).

2. Dispositif de coupe à mouvement alternatif comprenant
- une première lame de couteau à mouvement alternatif (43) ;
- un moteur (6) pour entraîner ladite première lame de couteau à mouvement alternatif (43) ;
- un pignon (8) placé sur l'arbre (7) dudit moteur (6) ;
- un disque circulaire (10) tournant autour d'un axe (12) s'étendant perpendiculairement au disque (10) par son centre et comprenant une couronne dentée (9) sur sa circonférence, la couronne dentée (9) étant engagée avec le pignon (8) ; et
- un moyen de conversion (39, 40, 45, 46) pour convertir le mouvement rotatif du disque circulaire (10) en un mouvement alternatif,
caractérisé
- par une seconde lame de couteau à mouvement alternatif (44), et
- en ce que le moyen de conversion comprend une première plaque (45) connectée à ladite première lame de couteau à mouvement alternatif (43) et une seconde plaque (46) connectée à ladite seconde lame de couteau à mouvement alternatif (44), et comprenant, en outre, un triangle équilatéral à côtés épitrochoïdaux sur chaque côté du disque circulaire (10) et s'étendant par une fente (55) dans chacune desdites plaques (45, 46), chacune desdites fentes s'étendant perpendiculairement à la direction du mouvement des lames (43, 44).

3. Dispositif selon la revendication 1 ou 2, caractérisé en ce que le dispositif est une cisaille à haie électrique, en ce qu'au moins une des lames de couteau à mouvement alternatif (43, 44) est constituée d'une plaque et présente des dents coupantes (50) avec des arêtes coupantes (52) qui sont courbées les unes vers les autres, de sorte que les arêtes coupantes (52) soient formées par une surface de liaison de la plaque et constituent une surface d'affûtage s'étendant parallèlement à la lame (43, 44).

4. Dispositif selon la revendication 3, caractérisé en ce que les lames sont chacune pourvues d'une rainure (47) s'étendant dans la direction longitudinale de la lame et obtenue par courbure de la plaque.

5. Dispositif selon la revendication 4, caractérisé en ce que la nervure de renforcement (48, 49) est placée dans la rainure (47) et en ce que les nervures de renforcement (48, 49) sont mutuellement connectées par les lames (43, 44).

6. Dispositif selon l'une quelconque des revendications précédentes, caractérisé en ce que les lames (43, 44) sont chacune pourvues sur un côté avec un moyen (51) pour limiter l'épaisseur maximale de branche à couper et en ce que les lames (43, 44) sont disposées dans des directions mutuellement opposées.

7. Dispositif selon la revendication 6, caractérisé en ce que le moyen pour limiter l'épaisseur maximale de branche à couper est constitué de parties saillantes en éventail (51) placées sur chacune des dents (50) présentes sur un côté de la lame (43, 44).
